# EUROPEAN PATENT SPECIFICATION

(11) **EP 3 025 266 B1**
(45) Date of publication and mention of the grant of the patent: **11.09.2019**
(21) Application number: 14829313.7
(22) Date of filing: 15.07.2014
(51) Int. Cl.: G06F 21/71, G06F 12/14, H04L 9/32, G06F 9/30

(54) **MEASURING A SECURE ENCLAVE**
MESSUNG EINER SICHEREN ENKLAVE
MESURE D'UNE ENCLAVE SÉCURISÉE

(30) Priority: 23.07.2013 US 201313949110
(43) Date of publication of application: 01.06.2016
(73) Proprietor: Intel Corporation, Santa Clara, CA 95054 (US)
(72) Inventor: ROZAS, Carlos V., Portland, Oregon 97229 (US); ANATI, Ittai, HA Ramat Hasharon, 4723939 (IL); GERZON, Gideon, 30900 Zichron Yaakov (IL); GUERON, Shay, 32714 Haifa (IL); JOHNSON, Simon P., Beaverton, Oregon 97007 (US); MCKEEN, Francis X., Portland, Oregon 97229 (US); SAVAGAONKAR, Uday R., Portland, Oregon 97229 (US); SCARLATA, Vincent R., Beaverton, Oregon 97006 (US)
(74) Representative: HGF Limited
(86) International application number: PCT/US2014/046667
(87) International publication number: WO 2015/013062

(56) References cited:
- WO-A1-2011/078855
- WO-A1-2013/002789
- WO-A1-2013/048407
- WO-A2-2012/088029
- US-A1- 2012 159 184
- US-A1- 2012 163 589
- US-A1- 2012 163 589
- US-A1- 2013 159 726

## Description

### BACKGROUND

### 1. Field

The present disclosure pertains to the field of information processing, and more particularly, to the field of security in information processing systems.

### 2. Description of Related Art

Confidential information is stored, transmitted, and used by many information processing systems. Therefore, techniques have been developed to provide for the secure handling and storing of confidential information. These techniques include various approaches to creating and maintaining a secured, protected, or isolated container, partition, or environment within an information processing system.

Reference is made to WO 2011/078855 A1, which discloses a technique to enable secure application and data integrity within a computer system. In one arrangement, one or more secure enclaves are established in which an application and data may be stored and executed.

### Brief Description of the Figures

The present invention is illustrated by way of example and not limitation in the accompanying figures.
Figure 1 illustrates a system providing for measuring a secure enclave according to an embodiment of the present invention.
Figure 2 illustrates a processor providing for measuring a secure enclave according to an embodiment of the present invention.
Figure 3 illustrates an enclave page cache according to an embodiment of the present invention.
Figure 4 illustrates a method for measuring a secure enclave according to an embodiment of the present invention.

### Detailed Description

The invention is set out in the appended set of claims.

Embodiments of an invention for measuring a secure enclave are described. In this description, numerous specific details, such as component and system configurations, may be set forth in order to provide a more thorough understanding of the present invention. It will be appreciated, however, by one skilled in the art, that the invention may be practiced without such specific details. Additionally, some well-known structures, circuits, and other features have not been shown in detail, to avoid unnecessarily obscuring the present invention.

In the following description, references to "one embodiment," "an embodiment," "example embodiment," "various embodiments," etc., indicate that the embodiment(s) of the invention so described may include particular features, structures, or characteristics, but more than one embodiment may and not every embodiment necessarily does include the particular features, structures, or characteristics. Further, some embodiments may have some, all, or none of the features described for other embodiments.

As used in the claims, unless otherwise specified the use of the ordinal adjectives "first," "second," "third," etc. to describe an element merely indicate that a particular instance of an element or different instances of like elements are being referred to, and is not intended to imply that the elements so described must be in a particular sequence, either temporally, spatially, in ranking, or in any other manner.

Also, the terms "bits," "flags," "fields," "entries," etc., may be used to describe any type of storage location in a register, table, database, or other data structure, whether implemented in hardware or software, but are not meant to limit embodiments of the invention to any particular type of storage location or number of bits or other elements within any particular storage location. The term "clear" may be used to indicate storing or otherwise causing the logical value of zero to be stored in a storage location, and the term "set" may be used to indicate storing or otherwise causing the logical value of one, all ones, or some other specified value to be stored in a storage location; however, these terms are not meant to limit embodiments of the present invention to any particular logical convention, as any logical convention may be used within embodiments of the present invention.

As described in the background section, various approaches to creating and maintaining a secured, protected, or isolated container, partition, or environment within an information processing system have been developed. One such approach involves secure enclaves as described in the co-pending U.S. Patent Application entitled "Method and Apparatus to Provide Secure Application Execution," filed June 19, 2012, Serial No. 13/527,547, to provide information regarding at least one embodiment of a secured, protected, or isolated container, partition, or environment. Therefore, any instance of any secured, protected, or isolated container, partition, or environment used in any embodiment of the present invention may be referred to herein as a secure enclave or an enclave.

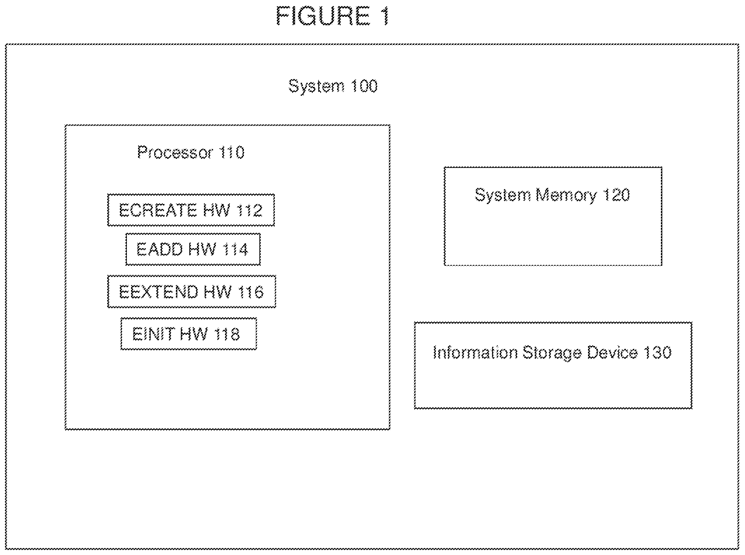

Figure 1 illustrates system 100, an information processing system providing for measuring a secure enclave according to an embodiment of the present invention. System 100 may represent any type of information processing system, such as a server, a desktop computer, a portable computer, a set-top box, a hand-held device such as a tablet or a smart phone, or an embedded control system. System 100 includes processor 110, system memory 120, and information storage device 130. Systems embodying the present invention may include any number of each of these components and any other components or other elements, such as peripherals and input/output devices. Any or all of the components or other elements in this or any system embodiment, may be connected, coupled, or otherwise in communication with each other through any number of buses, point-to-point, or other wired or wireless interfaces or connections, unless specified otherwise. Any components or other portions of system 100, whether shown in Figure 1 or not shown in Figure 1, may be integrated or otherwise included on or in a single chip (a system-on-a-chip or SOC), die, substrate, or package.

System memory 120 may be dynamic random access memory or any other type of medium readable by processor 110. Information storage device 130 may include any type of persistent or non-volatile memory or storage, such as a flash memory and/or a solid state, magnetic, or optical disk drive.

Processor 110 may represent one or more processors integrated on a single substrate or packaged within a single package, each of which may include multiple threads and/or multiple execution cores, in any combination. Each processor represented as or in processor 110 may be any type of processor, including a general purpose microprocessor, such as a processor in the Intel® Core® Processor Family, Intel® Atom® Processor Family, or other processor family from Intel® Corporation, or another processor from another company, or a special purpose processor or microcontroller.

Processor 110 may operate according to an instruction set architecture that includes a first instruction to create a secure enclave, a second instruction to add content to a secure enclave, a third instruction to measure content of a secure enclave, and a fourth instruction to initialize a secure enclave. Although embodiments of the present invention may be practiced with a processor having any instruction set architecture and are not limited to the architecture of a processor family from Intel® Corporation, the instructions may be part of a set of software protection extensions to an existing architecture, and may be referred to herein as an ECREATE instruction, an EADD instruction, an EEXTEND instruction, and an EINIT instruction, respectively. Support for these instructions may be implemented in a processor using any combination of circuitry and/or logic embedded in hardware, microcode, firmware, and/or other structures arranged as described below or according to any other approach, and is represented in Figure 1 as ECREATE hardware 112, EADD hardware 114, EEXTEND hardware 116, and EINIT hardware 118.

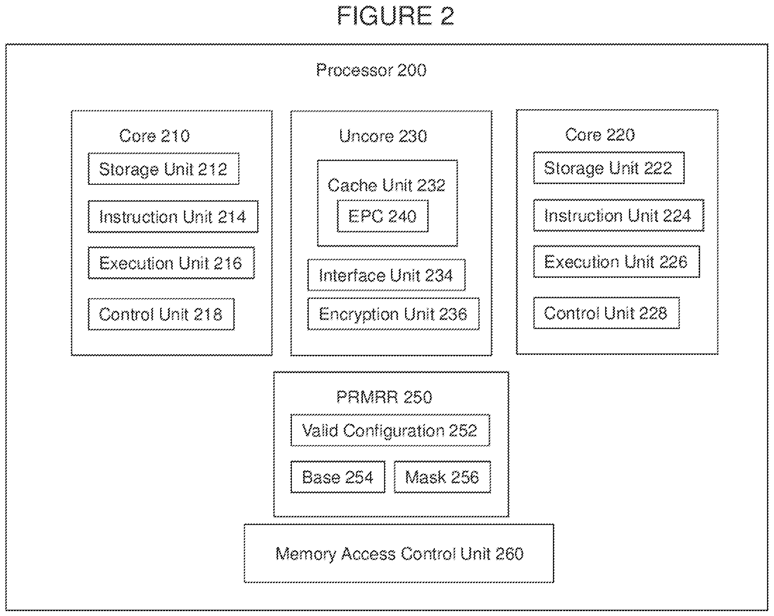

Figure 2 illustrates processor 200, an embodiment of which may serve as processor 110 in system 100. Processor 200 may include core 210, core 220, and uncore 230. Core 210 may include storage unit 212, instruction unit 214, execution unit 216, and control unit 218. Core 220 may include storage unit 222, instruction unit 224, execution unit 226, and control unit 228. Uncore 230 may include cache unit 232, interface unit 234, and encryption unit 236. Processor 200 may also include any other circuitry, structures, or logic not shown in Figure 2. The functionality of the ECREATE hardware 112, the EADD hardware 114, the EEXTEND hardware 116, and the EINIT hardware 118 as introduced above and further described below may be distributed among any of the labeled units or elsewhere in processor 200.

Storage units 212 and 222 may include any combination of any type of storage usable for any purpose within cores 210 and 220, respectively; for example, they may include any number of readable, writable, and/or read-writable registers, buffers, and/or caches, implemented using any memory or storage technology, for storing capability information, configuration information, control information, status information, performance information, instructions, data, and any other information usable in the operation of cores 210 and 220, respectively, as well as circuitry usable to access such storage.

Instruction units 214 and 224 may include any circuitry, logic, structures, and/or other hardware for fetching, receiving, decoding, interpreting, and/or scheduling instructions to be executed by cores 210 and 220, respectively. Any instruction format may be used within the scope of the present invention; for example, an instruction may include an opcode and one or more operands, where the opcode may be decoded into one or more micro-instructions or micro-operations for execution by execution unit 216 or 226, respectively. Instructions such as the ECREATE, EADD, EEXTEND, and EINIT instructions may be leaves of a single opcode, such as a privileged secure enclave opcode (e.g., ENCLS), where the leaf instructions are specified by the value in a processor register (e.g., EAX). Operands or other parameters may be associated with an instruction implicitly, directly, indirectly, or according to any other approach.

Execution units 216 and 226 may include any circuitry, logic, structures, and/or other hardware, such as arithmetic units, logic units, floating point units, shifters, etc., for processing data and executing instructions, micro-instructions, and/or micro-operations. Execution units 216 and 226 may include dedicated circuitry, logic, structures, and/or other hardware for measuring data according to embodiments of the present invention, including circuitry to implement a secure hash algorithm such as SHA-256, SHA-512, SHA-3, or SM3, or such measurements may be performed with shared circuitry, logic, structures, and/or other hardware in execution unit 216 and 226 and/or elsewhere in processor 200.

Control units 218 and 228 may include any microcode, firmware, circuitry, logic, structures, and/or other hardware to control the operation of the units and other elements of cores 210 and 220, respectively, and the transfer of data within, into, and out of cores 210 and 220. Control units 218 and 228 may cause cores 210 and 220 and processor 200 to perform or participate in the performance of method embodiments of the present invention, such as the method embodiments described below, for example, by causing cores 210 and 220 to execute instructions received by instruction units 214 and 224 and micro-instructions or micro-operations derived from instructions received by instruction units 214 and 224.

Cache unit 232 may include any number of cache arrays and cache controllers in one or more levels of cache memory in a memory hierarchy of information processing system 100, implemented in static random access memory or any other memory technology. Cache unit 232 may be shared among any number of cores and/or logical processors within processor 200 according to any approach to caching in information processing systems. Cache unit 232 may also include one or more memory arrays to be used as enclave page cache (EPC) 240 as further described below.

Interface unit 234 may represent any circuitry, logic, structures, and/or other hardware, such as a link unit, a bus unit, or a messaging unit to allow processor 200 to communicate with other components in a system such as system 200 through any type of bus, point to point, or other connection, directly or through any other component, such as a bridge, hub, or chipset. Interface unit 234 may include one or more integrated memory controllers to communicate with a system memory such as system memory 120 or may communicate with a system memory through one or more memory controllers external to processor 200.

Encryption unit 236 may include any circuitry, logic, structures, and/or other hardware to execute any one or more encryption algorithms and the corresponding decryption algorithms.

Figure 2 also shows processor reserved memory range registers (PRMRR) 250 and memory access control unit 260 within processor 200. PRMRR 250 may represent any one or more storage locations in storage units 212 and 222, elsewhere in processor 200, and/or copies thereof in uncore 230. PRMRR 250 may be used, for example by configuration firmware such as a basic input/output system, to reserve one or more physically contiguous ranges of memory called processor reserved memory (PRM). Memory access control unit 260 may represent any circuitry, structures, logic, and/or other hardware anywhere in processor 200 that may control access to PRM such that EPC 240 may be created within the system memory space defined as PRM.

In an embodiment, PRM is of a size that is an integer power of two, e.g. 32MB, 64MB, or 128MB, and is aligned to a memory address that is a multiple of that size. PRMRR 250 may include one or more instances of a read-only PRMMR valid configuration register 252 to indicate the valid sizes to which PRM may be configured, one or more instances of a PRMMR base register 254 and a PRMMR mask register 256 to define one or more base addresses and ranges of PRM.

EPC 240 is a secure storage area in which software may be protected from attacks by malware operating at any privilege level. One or more secure enclaves may be created such that each enclave may include one or more pages or other regions of EPC 240 in which to store code, data, or other information in a way that it may only be accessed by software running inside that enclave. For example, a secure enclave may be used by a software application so that only that software application, while running inside that enclave, may access the contents of that enclave. No other software, not even an operating system or a virtual machine monitor, may read the unencrypted contents of that enclave, modify the contents of that enclave, or otherwise tamper with the contents of that enclave while the content is loaded into the EPC (assuming that the enclave is a production enclave, as opposed to, for example, a debug enclave). However, the contents of the enclave may be accessed by software executing from within that enclave on any processor in system 100. This protection is accomplished by the memory access control unit 260 operating according to the secure enclaves architecture.

In Figure 2, EPC 240 is shown in cache unit 232, where it may be a sequestered portion of a shared cache or a dedicated memory. Within or on the same die as processor 200, EPC 240 may be implemented in static random access memory, embedded dynamic random access memory, or any other memory technology. EPC 240 may also or additionally be implemented external to processor 200, for example within a secure region of system memory 120. To protect the content of secure enclaves when it is not stored on-die, encryption unit 236 may be used to encrypt the content before it is transferred off-die and to decrypt the content transferred back into EPC 240 on-die. Other protection mechanisms may also be applied to protect the content from replay and other attacks.

Embodiments of the present invention provide for measuring a secure enclave such that the measurement may be used in one or more secure enclave protection mechanisms. Measuring a secure enclave may include calculating, generating, or deriving a cryptographic hash, log, or other value based on the content of the enclave, amount of memory (e.g., number of EPC pages), relative location of each page, and/or any other attributes of the enclave or its content. The measurement may be used to provide assurance of the identity and proper construction of the enclave, in the generation of one or more cryptographic keys to encrypt and/or seal enclave data, in the generation of a digital signature or certificate to attest to the identity or and/or integrity of an application running inside the enclave, or for any other purpose.

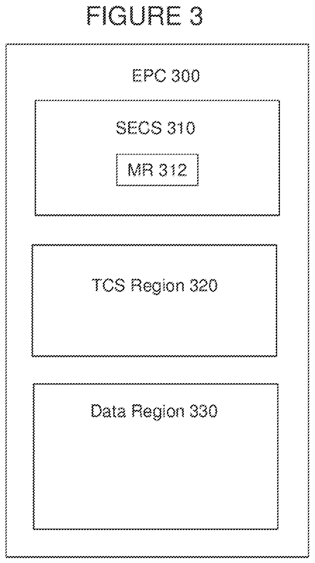

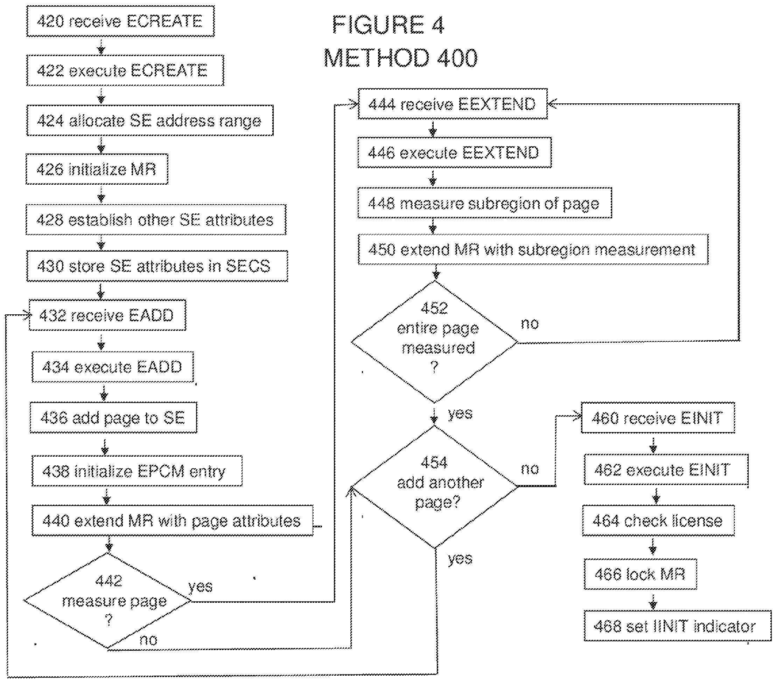

To illustrate, Figure 3 shows EPC 300, an embodiment of which serve as EPC 240 in Figure 2, and Figure 4 shows method 400 for measuring a secure enclave. Although method embodiments of the invention are not limited in this respect, reference may be made to elements of Figures 1, 2, and 3 to help describe the method embodiment of Figure 4.

In Figure 3, EPC 300 includes secure enclave control structure (SECS) 310, thread control structure (TCS) region 320, and data region 330. Although Figure 3 shows EPC 300 divided into three separate regions, EPC 300 may be divided into any number of chunks, regions, or pages, each of which may be used for any type of content. In one embodiment, it is divided into 4 kilobyte (KB) pages and is aligned to an address in system memory 120 that is a multiple of 4KB, SECS 310 may be any one of the 4KB pages in EPC 300, TCS region 320 may be any number of contiguous or non-contiguous 4KB pages, and data region 330 may be any number of contiguous or non-contiguous 4KB pages. Furthermore, although Figure 3 shows one SECS, one TCS region, and one data region corresponding to one secure enclave, an EPC may include any number of SECS and any number of TCS and data regions, so long as each enclave has one and only one SECS, each valid TCS and valid data region (e.g., page) belongs to one and only one enclave, and all of the SECS, TCS, and data pages fit within the EPC (or may be paged out of and back into the EPC).

An SECS is created by the execution of the ECREATE instruction to contain metadata to be used by hardware, and accessible only by hardware (i.e., not readable, writable, or otherwise accessible by software, whether running inside or outside the enclave), to define, maintain, and protect the enclave. For example, SECS 310 includes measurement register (MR) 312, which may be any size field within SECS 310; in one embodiment, MR 312 may be 32 bytes. MR 312 is to store the build measurement value of the enclave, which is initialized by the ECREATE instruction, updated by every EADD and EEXTEND instruction associated with the enclave, and locked by the EINIT instruction associated with the enclave.

One or more TCSs may also be associated with a secure enclave. A TCS contains metadata used by the hardware to save and restore thread specific information when entering and exiting the enclave.

The security attributes of each page are stored in a micro-architectural data structure called an enclave page cache map (EPCM) that is used by memory access control unit 260 to enforce the protections provided by the secure enclaves architecture. The EPCM stores one entry for each page in the EPC. Each entry includes an identifier (e.g., a 64 bit field) of the SECS (i.e., the enclave) to which the page belongs. These identifiers may be referred to by secure enclaves instructions, such as EADD, EEXTEND, and EINIT, to provide for the SECS to be read by hardware in order to execute the instruction.

Figure 4 shows method 400 for measuring a secure enclave, as well as the creation, addition of pages to, and initialization of the enclave. Method 400 includes the execution of ECREATE, EADD, EEXTEND, and EINIT instructions; however, embodiments of the present invention are not limited to these specifically named instructions. In method 400, these instructions may be issued, invoked, or otherwise used by privileged system software, such as an operating system or a virtual machine monitor. Embodiments of the present invention such as method 400 may be desirable because they allow the secure measurement of an application to be performed by untrusted software.

In box 420, an ECREATE instruction is received, for example by instruction unit 214. In one embodiment, ECREATE is the leaf of ENCLS with the value 0x0 in the EAX register. In box 422, the ECREATE instruction is executed, for example by execution unit 218. In one embodiment, execution of the ECREATE instruction includes, in box 424, the allocation of a range of addresses for use by a secure enclave. In one embodiment, the addresses may be a first type of address, for example a virtual or linear addresses, to be translated to a second type of address, for example a physical address in a system memory such as system memory 120. A first parameter associated with the ECREATE instruction may specify a base address of the address range and a second parameter may specify a size of the address range.

Execution of the ECREATE instruction may also include, in box 426, initializing the value of MR 312 to an initial value; in one embodiment, the initial value may be a value specified by the Federal Information Processing Standard (FIPS) for a secure hash algorithm (SHA) such as SHA-256. Execution of the ECREATE instruction may also include, in box 428, establishing other attributes of the enclave, and in box 430, storing the enclave attributes in an SECS. The EPC page used for the SECS may be a specified by a third parameter associated with the ECREATE instruction.

In box 432, an EADD instruction is received, for example by instruction unit 214. In one embodiment, EADD is the leaf of ENCLS with the value 0x1 in the EAX register. In box 434, the EADD instruction is executed, for example by execution unit 218. In one embodiment, execution of the EADD instruction includes, in box 436, adding or committing a region of memory within the range of addresses to the enclave; in one embodiment, the size of the first region may be a 4 KB page. Adding or committing a page to an enclave may include copying a source page from system memory into an EPC and associating the EPC page with an SECS in the EPC. The source page may be a regular page containing unencrypted code, data, or other information for the data region of the enclave, or the source page may be a TCS page containing data for the TCS region. A first parameter associated with the EADD instruction may specify the base address of the page, and a second parameter may specify the SECS of the enclave to which the page is to be added.

Execution of the EADD instruction may also include, in box 438, initializing an EPCM entry with the attributes of the page, including the page type (e.g., regular or TCS), the linear address with which software running inside the enclave will access the page, the access permissions for software running inside the enclave, any security flags for the page, and the SECS identifier of the enclave. In box 440, the content of MR 312 is cryptographically extended to reflect the content of the EPCM entry for the page; for example, the new content of MR 312 may be calculated by incrementally updating the intermediate hash value in MR 312 with a string that indicates that an EADD operation was performed, where the string is based on all or some of the content of the EPCM entry. In one embodiment, the cryptographic hash used is SHA-256.

In box 442, it is determined, for example by the software that created the enclave, whether the region added in box 436 is to be measured. If so, then method 400 continues in box 444. If not, then method 400 continues in box 454. Embodiments of the present invention may be desired to provide for reducing enclave build latency by adding regions or pages to an enclave, such as portions of the stack and/or heap that have been initialized before use, without measuring them during the build.

In box 444, an EEXTEND instruction is received, for example by instruction unit 214. In one embodiment, EEXTEND is the leaf of ENCLS with the value 0x6 in the EAX register. In box 446, the EEXTEND instruction is executed, for example by execution unit 218. In one embodiment, execution of the EEXTEND instruction includes, in box 448, measuring the contents of a subregion of the region of memory committed in box 436, where the size of the subregion is smaller than the size of the region. In one embodiment, the size of the subregion is 128 bytes. A first parameter associated with the EEXTEND instruction (e.g., the contents of the RCX register) may specify the base address of the subregion. In box 450, the content of MR 312 is cryptographically extended to reflect the location and content of the subregion; for example, the new content of MR 312 may be calculated by incrementally updating the intermediate hash value in MR 312 with a string based on a header and the content of the 128 byte subregion, where the header indicates the relative address (e.g., with respect to the enclave's base address) of the 128 byte subregion and that the extension is related to an EEXTEND operation. In one embodiment, the cryptographic hash used is SHA-256.

Embodiments of the present invention may provide for the EEXTEND instruction to fail (e.g., signal an error, fault, or other such condition) if a valid address of a subregion is not associated with the instruction; for example, if the contents of the RCX register refer to page that has not been added to the enclave or to an SECS. Also, the EEXTEND instruction may fail if the SECS of the enclave owning the region (e.g., page) including the subregion (e.g., the 256 bytes) is locked by another thread or the enclave has already been initialized.

In one embodiment, a single execution of the EEXTEND instruction may incrementally extend the measurement in MR 312; for example, in an embodiment where the subregion is 256 bytes, a single invocation of EEXTEND may extend the measurement in MR 312 with the lowest 64 bytes of the subregion (i.e., [63:0B]), then with the second lowest 64 bytes (i.e., [127:64B]), then with the third lowest 64 bytes (e.g., [191:128B]), then with the highest 64 bytes (e.g., [255:192B]).

In box 452, it is determined, for example by the software that created the enclave, whether the entire region added in box 436 has been measured. If not, then method 400 returns to box 444 for a different subregion of the region. If so, then method 400 continues in box 454. In one embodiment involving a 4KB page and 256 byte subregions, EEXTEND is invoked 16 times to incrementally measure an entire page. Embodiments of the present invention may be desired to provide for measuring a secure enclave incrementally such that measuring an application does not need to be performed by software using existing instructions, which may be unsecure and may prevent servicing of interrupts and cause glitches in certain applications such as audio streaming.

In box 454, it is determined, for example by the software that created the enclave, whether more regions are to be added to the enclave. If so, then method 400 returns to box 432 to add a different region to the enclave. If not, then method 400 continues in box 460.

In box 460, an EINIT instruction is received, for example by instruction unit 214. In one embodiment, EINIT is the leaf of ENCLS with the value 0x2 in the EAX register. In box 462, the EINIT instruction is executed, for example by execution unit 218. In one embodiment, execution of the EEINIT instruction may include, in box 464, checking a license token to ensure that the corresponding enclave is valid, in box 466, locking the measurement register such that its contents remain unchanged, even by the subsequent execution of an EADD or an EEXTEND instruction, and, in box 468, setting an attribute indicator in the SECS to prevent any more regions or pages from being added to the enclave. The license token used in box 464 may be provided, by the software that created the secure enclave, as a first parameter associated with the EINIT instruction and is unique to the enclave. A second parameter may specify the SECS of the enclave which is to be initialized. Ensuring the enclave is valid in box 464 may include comparing the final value of MR 312 with an expected measurement of the enclave, where in one embodiment the final value of MR 312 is the unique SHA-256 digest that identifies, cryptographically, the code and data placed inside the enclave, the position and placement order of the pages inside the enclave, and the security properties of each page.

In various embodiments of the present invention, the method illustrated in Figure 4 may be performed in a different order, with illustrated boxes combined or omitted, with additional boxes added, or with a combination of reordered, combined, omitted, or additional boxes. For example, a page may be added to a secure enclave using the EADD instruction at any time before, during, or after the measurement of a previously added page with EEXTEND instructions. For example, each page may be measured before the next page is added, or all pages may be added before any of the pages are measured. Note that different measurements may be generated by different sequences of EADD and EEXTEND instructions. In one embodiment, micro-architectural locks prevent the EADD, EEXTEND, and EINIT instructions from operating on the same SECS concurrently. Furthermore, many other method embodiments are possible within the scope of the present invention.

Embodiments or portions of embodiments of the present invention, as described above, may be stored on any form of a machine-readable medium. For example, all or part of method 400 may be embodied in software or firmware instructions that are stored on a medium readable by processor 110, which when executed by processor 110, cause processor 110 to execute an embodiment of the present invention. Also, aspects of the present invention may be embodied in data stored on a machine-readable medium, where the data represents a design or other information usable to fabricate all or part of processor 110.

Thus, embodiments of an invention for measuring a secure enclave have been described. While certain embodiments have been described, and shown in the accompanying drawings, it is to be understood that such embodiments are merely illustrative and not restrictive of the broad invention, and that this invention not be limited to the specific constructions and arrangements shown and described, since various other modifications may occur to those ordinarily skilled in the art upon studying this disclosure. In an area of technology such as this, where growth is fast and further advancements are not easily foreseen, the disclosed embodiments may be readily modifiable in arrangement and detail as facilitated by enabling technological advancements without departing from the principles of the present disclosure or the scope of the accompanying claims.

## Claims

1. A processor (110) comprising:
an instruction unit to receive a first instruction (112), a second instruction (114), and a third instruction (116); and
an execution unit to execute the first instruction, the second instruction, and the third instruction, wherein execution of the first instruction includes initializing a measurement field (312) in a control structure of a secure enclave (310) with an initial value, execution of the second instruction includes adding a region to the secure enclave, and execution of the third instruction includes measuring a subregion of the region, wherein:
execution of the second instruction also includes extending the initial value to generate a first extended value, where the first extended value is based on attributes of the region;
execution of the second instruction also includes replacing the initial value in the secure enclave control structure with the first extended value; execution of the third instruction includes extending the first extended value to generate a second extended value, wherein the second extended value is based on a measurement of the subregion;
execution of the third instruction also includes replacing the first extended value in the secured enclave control structure with the second extended value; and
the instruction unit is also to receive a fourth instruction (118), the execution unit is also to execute a fourth instruction, and execution of the fourth instruction includes locking (466) the measurement field in the secure enclave control structure.

2. The processor of claim 1, wherein the measurement of the subregion is based on the content of the subregion.

3. The processor of claim 2, wherein the measurement of the subregion is also based on the location of the subregion within the region.

4. The processor of claim 1, wherein the second extended value is generated by incrementally updating the first extended value.

5. The processor of claim 1, further comprising an enclave page cache in which to store the secure enclave control structure.

6. The processor of claim 1, wherein the third instruction has an associated parameter to indicate the location of the subregion.

7. A system comprising:
a system memory; and
the processor according to any preceding claim

## Patentansprüche

1. Prozessor (110), der Folgendes umfasst:
eine Anweisungseinheit, um eine erste Anweisung (112), eine zweite Anweisung (114) und eine dritte Anweisung (116) zu empfangen; und
eine Ausführungseinheit, um die erste Anweisung, die zweite Anweisung und die dritte Anweisung auszuführen, wobei das Ausführen der ersten Anweisung ein Initialisieren eines Messfeldes (312) in einer Steuerstruktur einer sicheren Enklave (310) mit einem Anfangswert enthält, das Ausführen der zweiten Anweisung ein Hinzufügen eines Bereichs zur sicheren Enklave enthält und das Ausführen der dritten Anweisung ein Messen eines Unterbereichs des Bereichs enthält, wobei
das Ausführen der zweiten Anweisung außerdem ein Erweitern des Anfangswerts enthält, um einen ersten erweiterten Wert zu erzeugen, wobei der erste erweiterte Wert auf Merkmalen des Bereichs basiert;
das Ausführen der zweiten Anweisung außerdem ein Ersetzen des Anfangswerts in der Steuerstruktur einer sicheren Enklave durch den ersten erweiterten Wert enthält; das Ausführen der dritten Anweisung ein Erweitern des ersten erweiterten Werts enthält, um einen zweiten erweiterten Wert zu erzeugen, wobei der zweite erweiterte Wert auf einer Messung des Unterbereichs basiert;
das Ausführen der dritten Anweisung außerdem ein Ersetzen des ersten erweiterten Werts in der Steuerstruktur einer sicheren Enklave durch den zweiten erweiterten Wert enthält; und
die Anweisungseinheit außerdem dazu dient, eine vierte Anweisung (118) zu empfangen, die Anweisungseinheit außerdem dazu dient, eine vierte Anweisung auszuführen, und die Ausführung der vierten Anweisung ein Verriegeln (466) des Messfeldes in der Steuerstruktur einer sicheren Enklave enthält.

2. Prozessor nach Anspruch 1, wobei die Messung des Unterbereichs auf dem Inhalt des Unterbereichs basiert.

3. Prozessor nach Anspruch 2, wobei die Messung des Unterbereichs auch auf der Lage des Unterbereichs im Bereich basiert.

4. Prozessor nach Anspruch 1, wobei der zweite erweiterte Wert durch schrittweises Aktualisieren des ersten erweiterten Werts erzeugt wird.

5. Prozessor nach Anspruch 1, der ferner einen Enklavenseiten-Zwischenspeicher, in dem die Steuerstruktur einer sicheren Enklave gespeichert werden soll, umfasst.

6. Prozessor nach Anspruch 1, wobei die dritte Anweisung einen zugeordneten Parameter besitzt, um die Lage des Unterbereichs anzuzeigen.

7. System, das Folgendes umfasst:
einen Systemspeicher; und
den Prozessor nach einem vorhergehenden Anspruch.

## Revendications

1. Processeur (110), comprenant :
une unité d'instructions destinée à recevoir une première instruction (112), une deuxième instruction (114) et une troisième instruction (116) ; et
une unité d'exécution destinée à exécuter la première instruction, la deuxième instruction et la troisième instruction, l'exécution de la première instruction comportant l'initialisation d'un champ de mesure (312) dans une structure de commande d'une enclave sécurisée (310) par une valeur initiale, l'exécution de la deuxième instruction comportant l'ajout d'une région à l'enclave sécurisée et l'exécution de la troisième instruction comportant la mesure d'une sous-région de la région,
l'exécution de la deuxième instruction comportant également l'extension de la valeur initiale afin de générer une première valeur étendue, la première valeur étendue étant basée sur des attributs de la région ;
l'exécution de la deuxième instruction comportant également le remplacement de la valeur initiale dans la structure de commande de l'enclave sécurisée par la première valeur étendue ;
l'exécution de la troisième instruction comportant l'extension de la première valeur étendue afin de générer une deuxième valeur étendue, la deuxième valeur étendue étant basée sur une mesure de la sous-région ;
l'exécution de la troisième instruction comportant également le remplacement de la première valeur étendue dans la structure de commande de l'enclave sécurisée par la deuxième valeur étendue ; et
l'unité d'instructions étant également destinée à recevoir une quatrième instruction (118), l'unité d'exécution étant également destinée à exécuter une quatrième instruction, et l'exécution de la quatrième instruction comportant le verrouillage (466) du champ de mesure dans la structure de commande l'enclave sécurisée.

2. Processeur selon la revendication 1, dans lequel la mesure de la sous-région est basée sur le contenu de la sous-région.

3. Processeur selon la revendication 2, dans lequel la mesure de la sous-région est également basée sur l'emplacement de la sous-région au sein de la région.

4. Processeur selon la revendication 1, dans lequel la deuxième valeur étendue est générée par mise à jour incrémentale de la première valeur étendue.

5. Processeur selon la revendication 1, comprenant en outre un cache de pages d'enclave servant à stocker la structure de commande de l'enclave sécurisée.

6. Processeur selon la revendication 1, dans lequel la troisième instruction comporte un paramètre associé destiné à indiquer l'emplacement de la sous-région.

7. Système, comprenant :
une mémoire système ; et
le processeur selon l'une quelconque des revendications précédentes.
